# EUROPÄISCHE PATENTSCHRIFT

(11) **EP 0 697 297 B1**
(45) Veröffentlichungstag und Bekanntmachung des Hinweises auf die Patenterteilung: **23.02.2000**
(21) Anmeldenummer: 95111300.0
(22) Anmeldetag: 19.07.1995
(51) Int. Cl.: B60G 5/053

(54) **Doppelachsaggregat eines Nutzfahrzeuges mit spezieller Blattfederorgan-Lagerung**
Twin axle unit of a utility vehicle with special leaf spring support member
Essieux en tandem d'un véhicule utilitaire avec support spécial à ressort à lames

(30) Priorität: 19.08.1994 DE 4429583
(43) Veröffentlichungstag der Anmeldung: 21.02.1996
(73) Patentinhaber: MAN Nutzfahrzeuge Aktiengesellschaft, 80976 München (DE)
(72) Erfinder: Stummer, Josef, Dipl.-Ing., D-80935 München (DE); Übelacker, Andreas, Dipl.-Ing., D-85244 Röhrmoos (DE)

(56) Entgegenhaltungen:
- EP-A- 0 141 894
- DE-A- 2 904 534
- DE-A- 3 313 252
- DE-A- 3 937 301
- DE-A- 4 309 004
- DE-U- 8 115 141
- GB-A- 2 131 104

## Beschreibung

Die Erfindung bezieht sich auf ein Doppelachsaggregat eines Nutzfahrzeuges, insbesondere eines Lastkraftwagens, mit Merkmalen entsprechend dem Oberbegriff des Anspruches 1.

Üblicherweise wird bei Nutzfahrzeugen mit einem Doppelachsaggregat unterhalb eines Rahmenlängsträgers ein Tragblock mit einem in diesen fest eingepreßten Tragzapfen anmontiert, wobei der Tragzapfen die Abstützung eines die beiden Achsen des Doppelachsaggregates verbindenden und abfedernden Blattfederorganes über den Tragbock gegen den Fahrzeugrahmen realisiert. Das federseitige Ende des Tragzapfens wird dabei von einer Lagerung umschlossen, die in einem separaten Lagergehäuse mit Abdichtung untergebracht ist und aus zwei axial beabstandet und spiegelbildlich zueinander angeordneten Kegelrollenlagern oder Gelenklagern besteht, welche radial - durch Eigengewicht und Nutzlast des Fahrzeuges - und axial - durch Kurvenfahrt und Fahrbahnunebenheiten - beansprucht sind und die Lagerung der Blattfederorgane übernehmen. Unabhängig von der Bauart des Blattfederorganes kann dieses bei betriebsbedingter Beanspruchung eine Drehbewegung von bis zu ± 15° Auslenkungswinkel um die Tragezapfenachse erfahren. Durch diese Drehbewegung des Blattfederorganes kann es zwischen den endseitigen Auflageflächen dessen ersten Federblattes und den sich gegen diese abstützenden Auflageflächen der Federsättel der beiden Achsen des Doppelachsaggregates zu einer Relativbewegung von bis zu ± 30 mm kommen. Dies kann zu großem Verschleiß an den Auflageflächen von Federsattel und erstem Federblatt führen, die Federwirkung des Blattfederpaketes insgesamt beeinträchtigen und einen erheblichen Beitrag zur Geräuschbildung liefern.

Aus der GB-A-2 131 104 ist ein Doppelachs-Federlager für einen Lastkraftwagen bekannt, bei dem das eine Ende eines Tragzapfens fest am Fahrgestell des Lastkraftwagens angebracht ist. Das andere Ende dieses Tragzapfens ragt von dem Fahrgestell ab und trägt zwei Wälzlager, welche auf ihrer Außenseite einen Auflagerbund aufweisen, auf dessen Oberseite sich die Mitte eines Federbündels abstützt.

Der Erfindung liegt die Aufgabe zugrunde, die Lagerung der Blattfederorgane des Doppelachsaggregates eines Nutzfahrzeuges hinsichtlich ihrer Funktion und ihrer Wirtschaftlichkeit zu optimieren.

Diese Aufgabe wird erfindungsgemäß durch die Merkmale des Anspruches 1 gelöst.

Bei dem erfindungsgemäßen Doppelachsaggregat ist jedes die beiden Achsen abfedernde Blattfederorgan oben an einem äußeren freien Aufnahmekopf eines im zugehörigen Tragbock drehbar gelagerten Tragzapfens abgestützt befestigt, wobei das im wesentlichen etwa eben aufliegende Blattfederorgan oben an einer am Aufnahmekopf gegebenen, in etwa in der Drehachsenebene des Tragzapfens liegenden, in etwa ebenen Auflagefläche aufliegend befestigt ist.

Das Blattfederorgan kann entweder durch ein herkömmliches Blattfederpaket, beispielsweise einer geschichteten Trapezfeder oder einer mehrlagigen Parabelfeder, oder durch eine gewichtssparende ein- oder zweiblättrige GFK-Feder aus glasfaserverstärktem Kunststoff realisiert sein und ist auf die Einsatzart des Fahrzeuges abgestimmt ausgelegt. Durch das erfindungsgemäße Verlegen der Lagerung des das Blattfederorgan abstützenden Tragzapfens in den Tragbock wird der Entfall eines bisher notwendigen separaten Lagergehäuses ermöglicht, was eine effiziente Gewichtsersparnis zur Folge hat. Zudem schafft der Entfall des separaten Lagergehäuses räumlich die Voraussetzung, die Ebene der Auflagefläche des Blattfederorganes abzusenken, vorzugsweise bis in den Bereich der Drehachsenebene des Tragzapfens herunter. Die infolge dieser Maßnahme über sämtliche Betriebszustände des Blattfederorgans hinweg konsequent erzielte Punktberührung zwischen den Auflageflächen von Federblattenden und Federsätteln führt zu einer Verbesserung der Kinematik zwischen Blattfederorgan und der durch dieses abgestützten und abgefederten Achsen. Die sich bei den herkömmlichen Vorrichtungen betriebsbedingt ergebenden, eingangs erwähnten großen Relativbewegungen zwischen den aufeinanderliegenden Auflageflächen von Federblattenden und Federsätteln können aufgrund der erfindungsgemäßen Lösung von ursprünglich bis zu ± 30 mm, auf nunmehr etwa ± 1,5 mm, also nur etwa einem Zwanzigstel des üblichen Wertes, reduziert werden. Damit wird bei dem erfindungsgemäßen Doppelachsaggregat der Verschleiß an den Auflageflächen von Federblatt und Federsattel wesentlich reduziert, die Geräuschentwicklung eingeschränkt und das Schwingungsverhalten des Blattfederorganes erheblich verbessert.

Das Blattfederorgan ist grundsätzlich oben an einer am Aufnahmekopf des Tragzapfens gegebenen, in etwa ebenen Auflagefläche aufliegend befestigt. Die Auflagefläche kann oben am äußeren freien Aufnahmekopf des Tragzapfens durch Anschmieden und/oder spanabnehmender Bearbeitung geschaffen und dabei der Kontur des aufliegenden Blattfederorganes entsprechend angepaßt sein. Die Blattfederorgane sind hierbei unmittelbar auf dem Aufnahmekopf des Tragzapfens mit entsprechenden Federbügeln verspannt. Die Federbügel können je nach Erfordernis in verschiedenen Positionierungen auf dem Aufnahmekopf befestigt sein.

Gemäß einer weiteren Ausgestaltung der Erfindung kann die Auflagefläche durch den Boden einer in der Fahrzeuglängsachse parallelen Nut gebildet sein, die im äußeren freien Aufnahmekopf angeschmiedet und/oder spanabnehmend eingearbeitet ist. In dieser Nut ist das Blattfederorgan in Achsrichtung des Tragzapfens seitengeführt aufgenommen und damit zusätzlich zu den generell üblichen, im Bereich seiner Auflagefläche angeordneten Federbügeln auf dem Aufnahmekopf des Tragzapfens stabilisiert. Der die Auflagefläche für das Blattfederorgan bildende Boden dieser Nut liegt vorzugsweise in der Drehachsenebene des Tragzapfens.

Gemäß einer weiteren Ausgestaltung der Erfindung kann der Tragzapfen aus einem spanabnehmend nachgearbeiteten Schmiedeteil bestehen.

Einer weiteren, vorteilhaften Ausgestaltung zufolge, kann der Aufnahmekopf des Tragzapfens durch einen koaxialen Fortsatz des für die Lagerung im Tragbock dienenden Teils des Tragzapfens gebildet sein. An diesem so ausgebildeten Aufnahmekopf ist ebenfalls die Auflagefläche bzw. die diese beinhaltende Nut durch Anschmieden und/oder spanabnehmender Bearbeitung angebracht.

Für die Lagerung des Tragzapfens können im Tragbock in besonders vorteilhafter Weise je nach Einsatzart des Lastkraftwagens die dafür geeigneten, unterschiedlichsten Lagerungen, wie beispielsweise Gelenklager (Gleitlager), Wälzlager, Verbundelager oder Flanschbuchsen vorgesehen sein.

Weitere vorteilhafte Ausgestaltungen und Weiterbildungen der erfindungsgemäßen Lösung sind in den Unteransprüchen angegeben.

Nachfolgend ist die Erfindung anhand von fünf in den Figuren dargestellten Ausführungsbeispielen noch näher erläutert.

In der Zeichnung zeigen:
- Fig. 1: ein Doppelachsaggregat in der Seitenansicht,
- Fig. 2: ein Doppelachsaggregat im Schnitt II - II nach Fig. 1,
- Fig. 3: einen vergrößerten Ausschnitt aus Fig. 2 mit einer Ausführungsform der erfindungsgemäßen Lösung,
- Fig. 4: entsprechend der Fig. 2 eine alternative Ausführungsform der Lagerung des Tragzapfens im Tragbock,
- Fig. 5: entsprechend der Fig. 2 eine zweite Ausführungsform der Tragzapfenlagerung,
- Fig. 6: entsprechend der Fig. 2 eine dritte Ausführungsform der Tragzapfenlagerung und
- Fig. 7: entsprechend der Fig. 4 eine Variante der Befestigung des Blattfederorganes auf dem Tragzapfen.

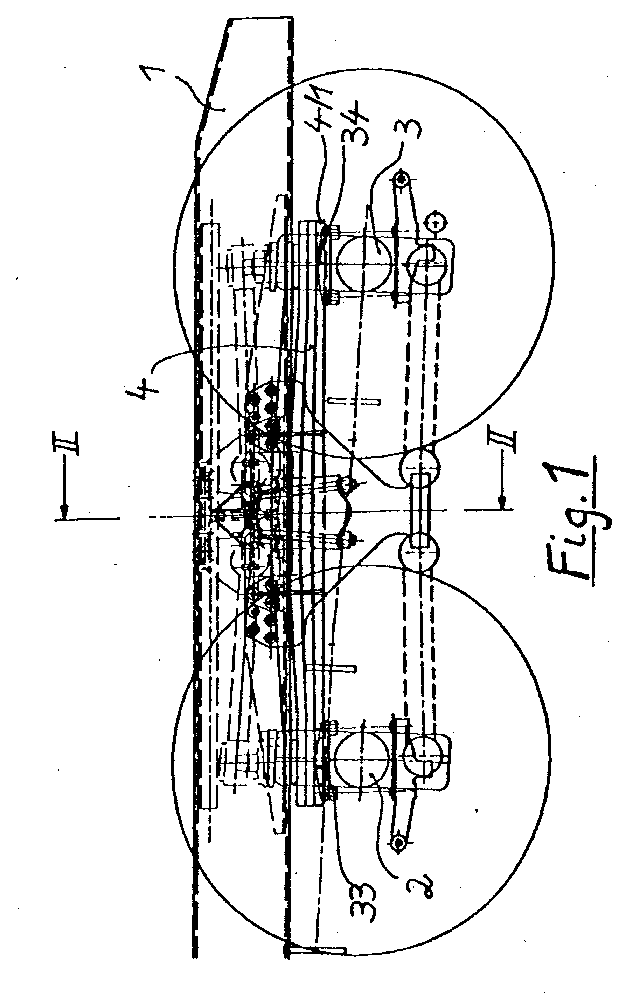

In Fig. 1 sind an einem Doppelachsaggregat eines Nutzfahrzeuges die beiden Rahmenlängsträger des Nutzfahrzeuges mit 1 und die beiden die zwei Achsen 2, 3 des Doppelachsaggregates verbindenden und abfedernden Blattfederorgane jeweils mit 4 bezeichnet. Die Blattfederorgane 4 stützen sich hierbei über ihre jeweils beiden Federblattenden ihrer ersten Federblätter 4/1 an den oben auf den Achsen 2, 3 befestigten Federsätteln 33, 34 ab. Das Blattfederorgan 4 kann nach Art eines herkömmlichen Blattfederpaketes mit geschichteten Trapezfedern oder mehrlagigen Parabelfedern bestückt, oder durch eine ein- oder zweiblättrige GFK-Feder aus glasfaserverstärktem Kunststoff realisiert sein. In den hier dargestellten Ausführungsvarianten sind als Blattfederorgane 4 Blattfederpakete aus mehrlagigen Parabelfedern vorgesehen, die bei Nutzfahrzeugen verschiedenster Einsatzarten Verwendung finden. In einer nicht gezeigten Version sind als Balttfederorgane ein- oder zweiblättrige GFK-Federn vorgesehen, die sich neben vielseitiger Einsatzmöglichkeit zudem durch ihr geringes Gewicht auszeichnen.

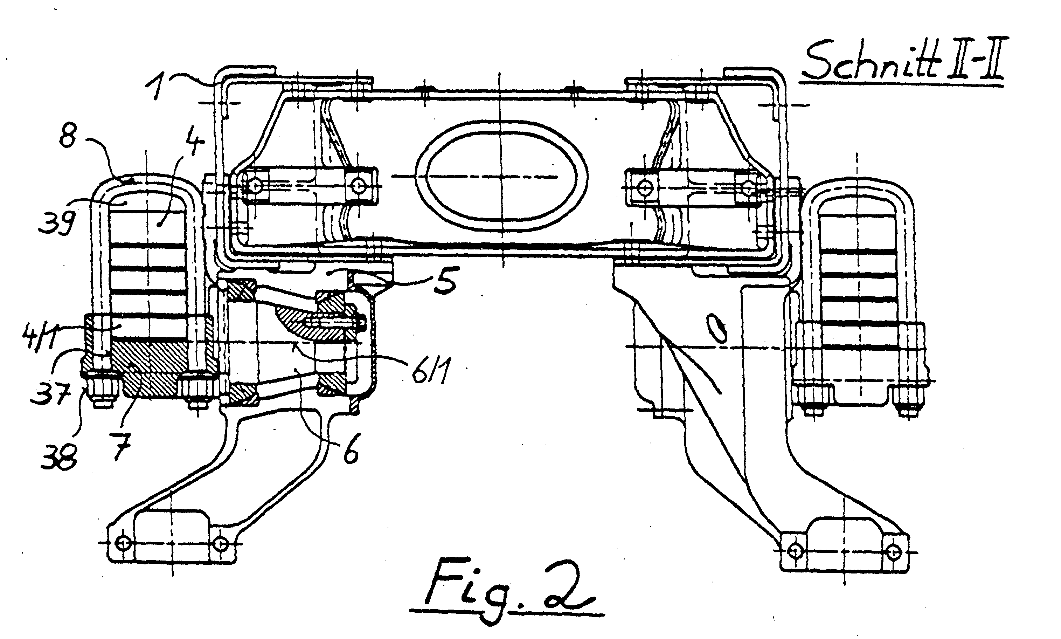

Wie aus Fig. 2 ersichtlich, sind in den Rahmenlängsträgern 1 Tragböcke 5 befestigt, in denen jeweils ein ein Blattfederorgan 4 abstützender Tragzapfen 6 drehbar gelagert ist. Die Befestigung des Blattfederorganes 4 oben an einem am Tragzapfen 6 außenendig gebildeten äußeren, freien Aufnahmekopf 7 erfolgt grundsätzlich über Federbügel 8, die das gesamte Blattfederorgan 4 auf dem Tragzapfen 6 einschließlich diesem umschließen und mit ihm verspannen. In der hier gezeigten Ausführungsvariante sind jeweils zwei U-förmig ausgebildete Federbügel 8 - in Längsrichtung der Tragzapfenachse 6/1 angeordnet - mit ihren beiden, nach unten gerichteten Enden in im Aufnahmekopf 7 des Tragzapfens 6 dafür vorgesehenen Bohrungen 37 aufgenommen und unterseitig des Aufnahmekopfes 7 mit entsprechenden Muttern 38 verspannt. Ein formschlüssiger, kräfteübertragender Einsatz 39 ist zwischen der Oberseite des Blattfederorganes 4 und dem U-förmigen Abschnitt des Federbügels 8 angeordnet.

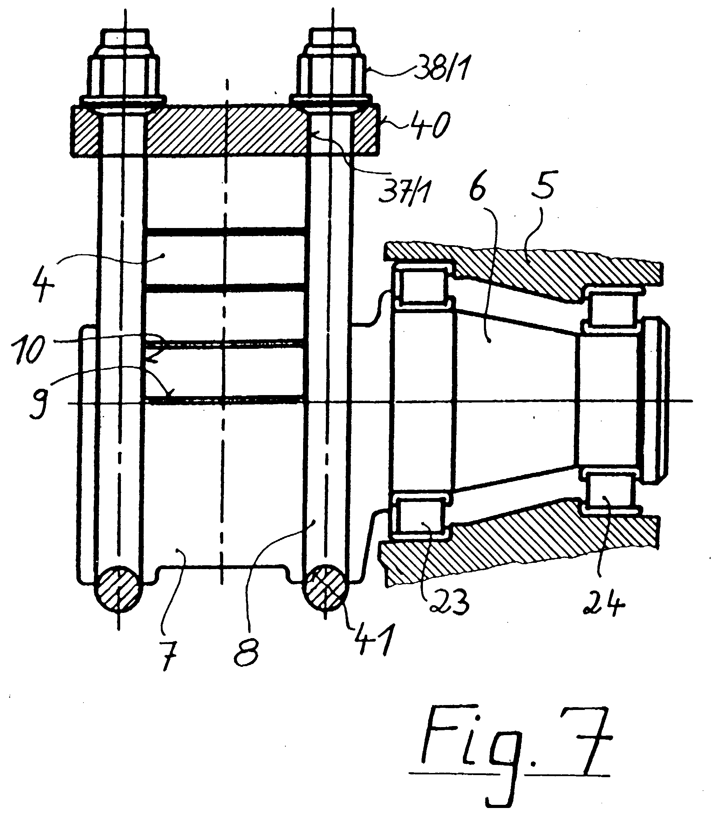

Nach einer weiteren, in Fig. 7 gezeigten Variante können die Federbügel 8 auch - in Fahrzeuglängsachse angeordnet - mit ihren beiden, nach oben gerichteten Enden in Bohrungen 37/1 einer auf dem Blattfederorgan 4 aufliegenden Halteplatte 40 aufgenommen und oberseitig dieser mit den entsprechenden Muttern 38/1 verspannt sein. Der Vorteil dieser Ausführungsform liegt in der einfacheren Gestaltung des von den U-förmigen Abschnitten der jeweiligen Haltebügel 8 umschlossenen Aufnahmekopfes 7. Bei der Unterseite des Aufnahmekopfes 7 sind lediglich Rillen 41 für die Aufnahme der U-förmigen Abschnitte der Haltebügel 8, beispielsweise durch Schmieden eingearbeitet. Das Einbringen von Bohrungen 37 in den Aufnahmekopf 7 entfällt bei dieser Lösung.

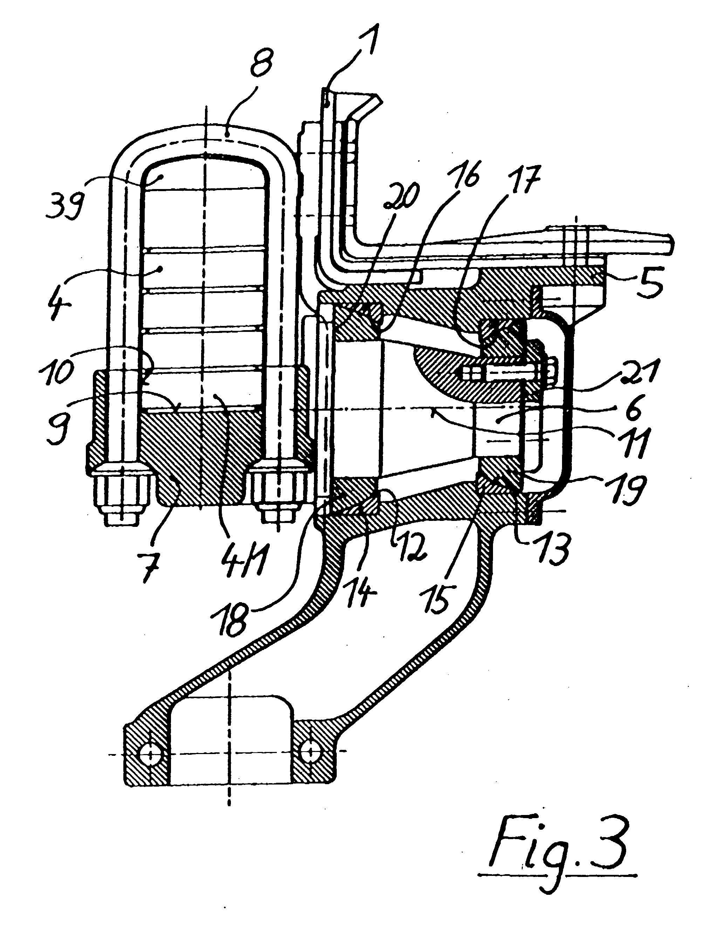

Eine in Fig. 3 dargestellte Ausführungsform zeigt anhand eines vergrößerten Ausschnittes aus Fig. 2 den im Tragbock 5 drehbar gelagerten Tragzapfen 6. Der Tragzapfen 6 besteht bevorzugt aus einem spanabnehmend nachbearbeiteten Schmiedeteil mit einem inneren Lagerungsabschnitt und einem an seinem äußeren freien Ende gebildeten Aufnahmekopf 7. An diesem Aufnahmekopf 7 ist oben eine Auflagefläche 9 für das aufzunehmende Blattfederorgan 4 gegeben. Diese Auflagefläche 9 kann in etwa eben, der aufliegenden Kontur des Blattfederorganes 4 angepaßt und beispielsweise durch Anschmieden und/oder spanende Bearbeitung auf dem Aufnahmekopf 7 aufgebracht sein. In dieser Version ist die an dem Aufnahmekopf 7 angeordnete Auflagefläche 9 gleichzeitig auch der Boden einer im Aufnahmekopf 7 eingearbeiteten, parallel zur Fahrzeuglängsachse verlaufenden Nut 10. In dieser Nut 10 ist das Blattfederorgan 4 in Richtung der Fahrzeuglängsachse seitengeführt am Aufnahmekopf 7 des Tragzapfens 6 aufgenommen. Die Nut 10 kann am äußeren freien Aufnahmekopf 7 angeschmiedet und spanabnehmend nachbehandelt oder direkt in den Aufnahmekopf 7 spanabnehmend eingearbeitet sein. Die Nut 10 ist auf die Breite des Blattfederorganes 4 abgestimmt und ermöglicht so dessen exakte Seitenführung. In bevorzugter Ausführungsform ist der die Auflagefläche 9 für das Blattfederorgan 4 bildende Boden der Nut 10 in etwa der Drehachsenebene 11 des Tragzapfens 6 angeordnet. Durch diese Maßnahme werden die betriebsbedingten Relativbewegungen zwischen den aufeinanderliegenden Auflageflächen von Federblattenden 4/1 und Federsättel 33, 34 von ursprünglich etwa ± 30 mm auf nunmehr etwa ± 1,5 mm, also nur etwa einem Zwanzigstel des üblichen Wertes gegenüber den herkömmlichen Vorrichtungen reduziert. Damit wird der Verschleiß an den Auflageflächen von Federblatt 4/1 und Federsattel 33 bzw. 34 wesentlich reduziert, die Geräuschentwicklung eingeschränkt und das Schwingungsverhalten des Blattfederorganes 4 sowie dessen Kinematik - in Verbindung mit den durch dieses abgestützten und abgefederten beiden Achsen - erheblich verbessert (Fig. 1).

Nach einer anderen, hier nicht gezeigten Version kann die das Blattfederorgan 4 aufnehmende Auflagefläche 9 an einem Aufnahmekopf 7 angebracht sein, der durch einen koaxialen Fortsatz des für die Lagerung im Tragbock 5 dienenden Teils des Tragzapfens 6 gebildet ist. Diese Auflagefläche 9 kann durch Anschmieden und/oder spanabnehmender Bearbeitung auf dem Aufnahmekopf 7 direkt oder wiederum als Boden einer diese beinhaltenden Nut 10 auf dem Aufnahmekopf 7 angebracht sein.

In dem hier gezeigten Ausführungsbeispiel sind für die Lagerung des Tragzapfens 6 im Tragbock 5 als Gleitlager Gelenklager 12, 13 verwendet. Hierbei werden zwei axial beabstandet und spiegelbildlich zueinander angeordnete, den Tragzapfen 6 axial und radial fixierende Gelenklager 12, 13 vorgesehen. Die Gelenklager 12, 13 sind mit ihren Außenringen 14, 15 in entsprechenden Aufnahmebohrungen 16, 17 im Inneren des Tragbockes 5 eingefaßt und mit ihren Innenringen 18, 19 gegen dem in diese eingeführten, als Lagerungsabschnitt dienenden Teil des Tragzapfens 6 abgestützt. Des weiteren sind die jeweiligen Innenringe 18, 19 der beiden Gelenklager 12, 13 zwischen einer aufnahmekopfseitig am Tragzapfen 6 gebildeten Tragzapfenschulter 20 und einer tragbockseitig am Tragzapfen 6 angeordneten, aufschraubbaren Lagerschulter 21 an diesen (6, 20) anstehend abgestützt, womit zugleich der Tragzapfen 6 im Tragbock 5 axial fixiert ist. Die Gelenklager 12, 13 nehmen die radiale als auch die axiale Belastung, welche durch Fahrzeuggewicht einerseits und die verschiedenen Fahrzustände des Fahrzeuges andererseits hervorgerufen werden, auf und stützen diese gegen Tragbock 5 bzw. Tragzapfen 6 ab. Nach einer anderen, hier nicht gezeigten Variante können für die Lagerung des Tragzapfens 6 im Tragbock 5 als Gleitlager in ähnlicher Weise der Gelenklager 12, 13 auch kunststoffbeschichtete Verbundlager vorgesehen sein, die sich durch längere Lebensdauer und wartungsfreien Betrieb auszeichnen. Diese Verbundlager sind im Prinzip nach Gleit- oder Gelenklager 12, 13, deren Lagerlauffläche jedoch aus einem Stahlstützkörper und einer auf dieser aufgesinterten, porösen Schicht aus Metallpulver bestehen kann, deren Poren und Oberfläche mit einer Kunststoff-Metallmischung ausfüllbar bzw. mit einer solchen Deckschicht versehbar sind. Sowohl die Gleitlager 12, 13 als auch die Verbundlager zeichnen sich durch kompakte Bauweise und nahezu wartungsfreien Betrieb aus.

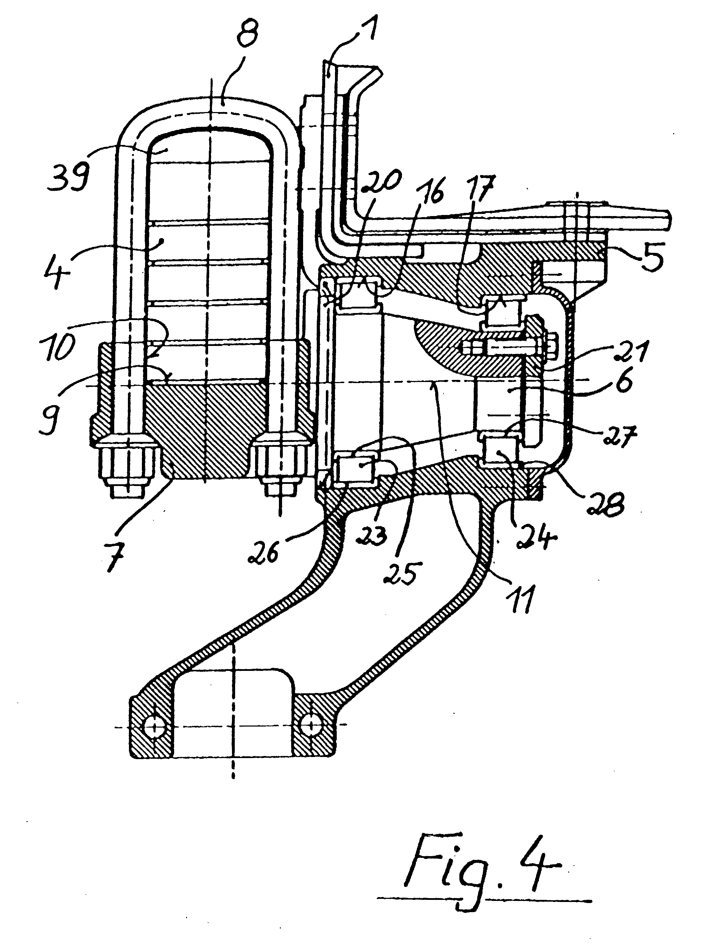

Fig. 4 zeigt schematisch anhand eines vergrößerten Ausschnittes aus Fig. 2 eine andere Version der Lagerung des Tragzapfens 6 im Tragbock 5, die hier durch Wälzlager realisiert ist. Als Wälzlager sind hierbei zwei axial beabstandet angeordnete, als Stützlager ausgelegte, den Tragzapfen 6 radial und axial fixierende Zylinderrollenlager 23, 24 vorgesehen. Diese Zylinderrollenlager 23, 24 sind in gleicher Weise der Gelenklager 12, 13 mit ihren Außenringen 26, 28 in entsprechenden Aufnahmebohrungen 16, 17 im Inneren des Tragbockes 5 eingefaßt und mit ihren Innenringen 25, 27 gegen den Tragzapfen.6 abgestützt. In dem hier gezeigten Ausführungsbeispiel sind die auf dem Tragzapfen 6 sitzenden Innenringe 25, 27 zwischen der aufnahmekopfseitigen Tragzapfenschulter 20 und der tragbockseitigen, aufschraubbaren Lagerschulter 21 gegen diese angestellt, womit zugleich der Tragzapfen 6 im Tragbock 5 axial fixiert ist. Die als Stützlager ausgelegten Zylinderrollenlager 23, 24 nehmen - in gleicher Weise der Festlager - neben radialen Belastungen auch axiale Belastungen über die Borde ihrer Innen- 25, 27 bzw. -Außenringe 26, 28, jedoch nur in einer Richtung auf. In der anderen Axialrichtung wirken diese Axial-Zylinderrollenlager 23, 24 wie Loslager, werden jedoch an ihren Innenringen 25, 27 zwischen Tragzapfenschulter 20 und aufschraubbaren Lagerschulter 21 axial fixiert und an ihren Außenringen 26, 28 gegen den Boden der Aufnahmebohrungen 16, 17 im Tragbock 5 abgestützt. Alternativ können auch die jeweiligen Außenringe 26, 28 zwischen der Tragzapfenschulter 20 und der aufschraubbaren Lagerschulter 21 - an letzteren anstehend - axial fixiert sein. Unabhängig von der Ausführungsform zeichnen sich diese Lagerungen durch lange Lebensdauer aus, da die Wälzlkörper der Wälzlager während ihres Betriebszustandes gleichmäßig beansprucht werden.

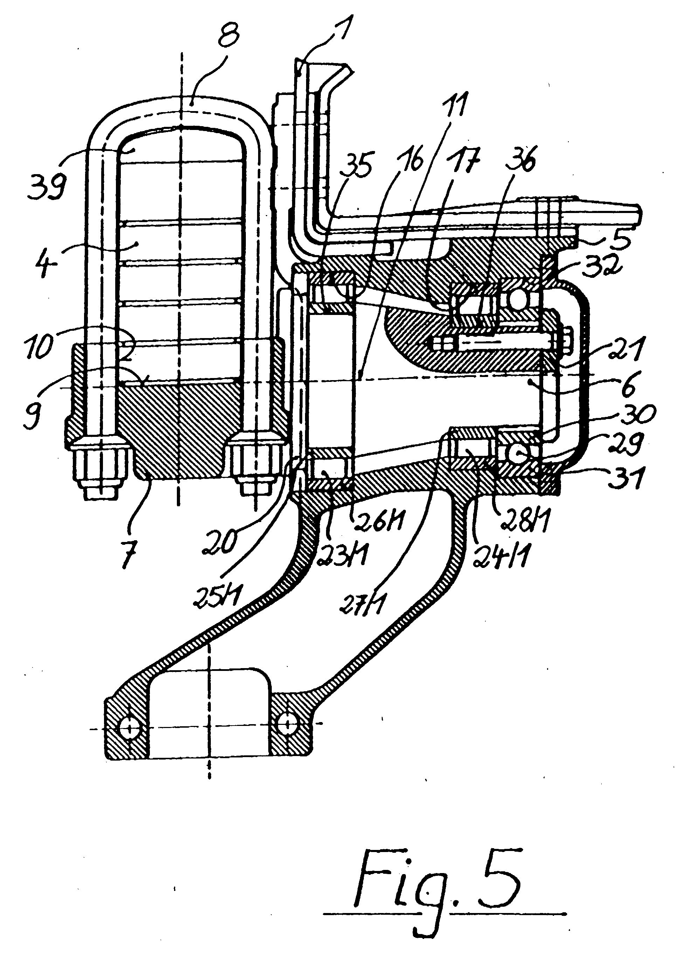

Fig. 5 zeigt ergänzend zu Fig. 3 und Fig. 4 eine weitere Version der Lagerung des Tragzapfens 6 im Tragbock 5. Hierbei sind als Wälzlager zwei axial beabstandet angeordnete, als Loslager ausgelegte, den Tragzapfen 6 radial fixierende Zylinderrollenlager 23/1, 24/1 vorgesehen, wobei dem tragbockseitigen Zylinderrollenlager 24/1 ein als Festlager ausgelegtes, den Tragzapfen 6 axial fixirerendes Kugellager 29 zugeordnet ist, dessen Innenring 30 keine Verbindung zum Tragzapfen 6 aufweist. In gleicher Weise der als Stützlager ausgelegten Zylinderrollenlager 23, 24 sind auch diese Zylinderrollenlager 23/1, 24/1 mit ihren Außenringen 26/1, 28/1 in entsprechenden Aufnahmebohrungen 16, 17 im Innerren des Tragbockes 5 eingefaßt. Die Innenringe 25/1, 27/1 der Zylinderrollenlager 23/1, 24/1 stützen sich auf in den Tragzapfen 6 eingearbeiteten Nuten 35, 36 ab und sind über letztere in jeweils einer Richtung axial fixiert. Die als Loslager ausgelegten, axial beabstandet angeordneten Zylinderrollenlager 23/1, 24/1 sind mit bordfreiem Außen- 26/1, 28/1 und Innenring 25/1, 27/1 ausgestattet, so daß sie ausschließlich Kräfte in radialer Richtung übertragen. Dem tragbockseitigen Zylinderrollenlager 24/1 ist ein zusätzliches, als Festlager ausgelegtes Kugellager 29 unmittelbar nachgeordnet. Dieses Kugellager 29 hat die Aufgabe, ausschließlich die axiale Belastung der Lagerung des Tragzapfens 6 im Tragbock 5 aufzunehmen. Der Innenring 30 dieses, seiner Belastung entsprechend dimensionierten Kugellagers 29 weist daher keine Verbindung zum Tragzapfen 6 auf. Der Außenring 31 des Kugellagers 29 ist in einer weiteren Aufnahmebohrung 32 im Tragbock 5 untergebracht. Insgesamt sind auch diese Wälzlager zwischen der aufnahmekopfseitigen Tragzapfenschulter 20 und der tragbockseitigen, aufschraubbaren Lagerschulter 21 abgestützt aufgenommen und über letztere verspannt. Hierbei ist das mit seinem Innenring 25/1 an der Tragzapfenschulter 20 anstehende, aufnahmekopfseitige Zylinderrollenlager 23/1 gegen das mit seinem Innenring 30 an der tragbockseitigen, aufschraubbaren Lagerschulter 21 anstehende Kugellager 29 über diese Lagerschulter 21 verspannt und axial fixiert. Das dem Kugellager 29 dabei unmittelbar vorgelagerte, tragbockseitige Zylinderrollenlager 24/1 steht mit seinem Innenring 27/1 an dem Innenring 30 des Kugellagers 29 an. Durch die vorteilhafte Anordnung von Zylinderrollenlagern 23/1, 24/1 und Kugellager 29 läßt sich der Tragzapfen 6 im Montagefall problemlos aus der dem Tragbock 5 integrierten Lagerung aus- und einbauen. Neben betriebs- und kostengünstigen Eigenschaften zeichnet sich diese Art der Lagerung neben langer Lebensdauer auch durch einfache Montier- und Demontierbarkeit aus.

In weiterer, hier nicht gezeigter Alternative können für die Lagerung des Tragzapfens 6 im Tragbock 5 als Wälzlager, in ähnlicher Weise der Gelenkklager 12, 13, auch zwei axial beabstandet und spiegelbildlich zueinander angeordnete, den Tragzapfen 6 radial und axial fixierende Kegelrollenlager vorgesehen sein. Diese Lagerung hat den Vorteil kompakter Bauweise.

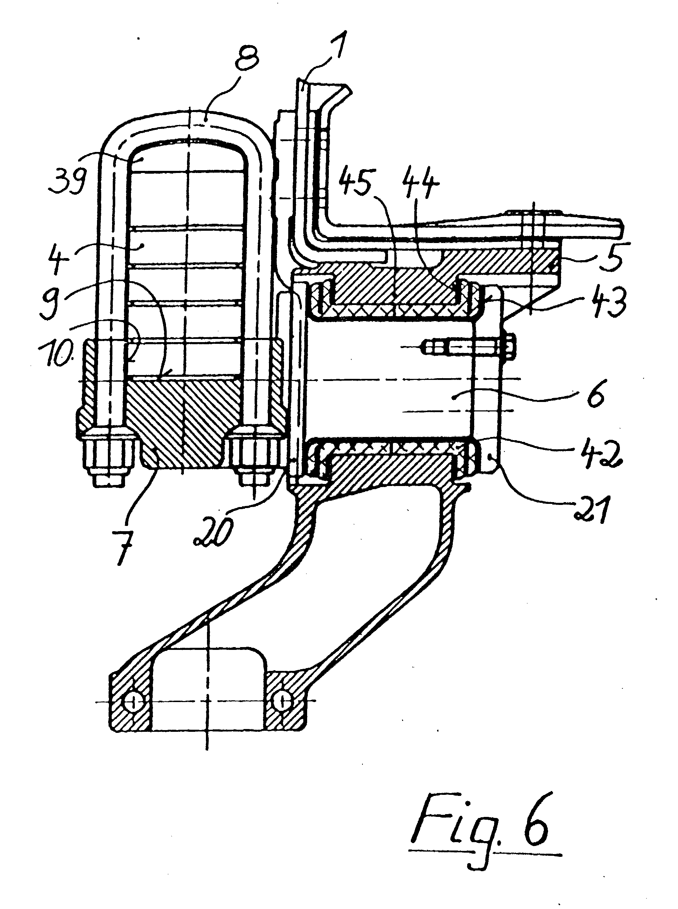

In Fig. 6 ist die Lagerung des Tragzapfens 6 im Tragbock 5 durch eine den Tragzapfen 6 radial und axial fixierende Flanschbuchse 42 realisiert. Diese ist aus Montagegründen zweiteilig ausgebildet und über ihre Flankenaußenseiten 43 zwischen aufnahmekopfseitiger Tragzapfenschulter 20 und aufschraubbarer Lagerschulter 21 auf dem Tragzapfen 6 axial fixiert. Die Flankeninnenseiten 44 der Flanschbuchse 42 stützen sich beidseitig an den Seiten eines im Tragbock 5 erhaben ausgebildeten, breiten Stützstegen 45 in axialer Richtung ab. Diese Ausführungsform zeichnet sich durch besonders einfache Montage- und Demontage sowie durch wartungsfreien Betrieb und hohe Beanspruchbarkeit aus.

## Patentansprüche

1. Doppelachsaggregat eines Nutzfahrzeuges, insbesondere eines Lastkraftwagens, das über zwei jeweils beide Achsen abfedernde, im wesentlichen etwa eben aufliegende Blattfederorgane (4) und je einem zugehörigen Tragbock (5) mit den beiden Rahmenlängsträgern (1) des Fahrzeuges verbunden ist, dadurch gekennzeichnet, daß jedes Blattfederorgan (4) oben an einem äußeren freien Aufnahmekopf (7) eines im zugehörigen Tragbock (5) drehbar gelagerten Tragzapfens (6) abgestützt befestigt ist, wobei das Blattfederorgan (4) oben an einer am Aufnahmekopf (7) gegebenen, in etwa in der Drehachsenebene (11) des Tragzapfens (6) liegenden, in etwa ebenen Auflagefläche (9) aufliegend befestigt ist.

2. Doppelachsaggregat nach Anspruch 1, dadurch gekennzeichnet, daß das Blattfederorgan (4) in einer zur Fahrzeuglängsachse parallelen Nut (10) am Aufnahmekopf (7) des Tragzapfens (6) in Achsrichtung desselben seitengeführt aufgenommen ist, wobei der Boden der Nut (10) die Auflagefläche (9) bildet.

3. Doppelachsaggregat nach einem der Ansprüche 1 und 2, dadurch gekennzeichnet, daß der Tragzapfen (6) aus einem spanabnehmend nachbearbeiteten Schmiedeteil besteht.

4. Doppelachsaggregat nach einem der Ansprüche 1 und 2, dadurch gekennzeichnet, daß der Aufnahmekopf (7) durch einen koaxialen Fortsatz des für die Lagerung im Tragbock (5) dienenden Teils des Tragzapfens (6) gebildet ist, an dem die Auflagefläche (9) bzw. die diese beinhaltende Nut (10) durch Anschmieden und/oder spanabnehmender Bearbeitung angebracht ist.

5. Doppelachsaggregat nach einem der vorangegangenen Ansprüche 1 bis 4, dadurch gekennzeichnet, daß für die Lagerung des Tragzapfens (6) im Tragbock (5) als Gleitlager zwei axial beabstandet und spiegelbildlich zueinander angeordnete, den Tragzapfen (6) radial und axial fixierende Gelenklager (12, 13) oder kunststoffbeschichtete Verbundlager vorgesehen sind.

6. Doppelachsaggregat nach einem der vorangegangenen Ansprüche 1 bis 4, dadurch gekennzeichnet, daß für die Lagerung des Tragzapfens (6) im Tragbock (5) als Wälzlager zwei axial beabstandet angeordnete, als Stützlager ausgelegte, den Tragzapfen (6) radial und axial fixierende Zylinderrollenlager (23, 24) vorgesehen sind.

7. Doppelachsaggregat nach einem der vorangegangenen Ansprüche 1 bis 4, dadurch gekennzeichnet, daß für die Lagerung des Tragzapfens (6) im Tragbock (5) als Wälzlager zwei axial beabstandet angeordnete, als Loslager ausgelegte, den Tragzapfen (6) radial fixierende Zylinderrollenlager (23/1, 24/1) vorgesehen sind, wobei einem Zylinderrollenlager (24/1) ein als Festlager ausgelegtes, den Tragzapfen (6) axial fixierendes Kugellager (29) zugeordnet ist, dessen Innenring (30) keine Verbindung zum Tragzapfen (6) aufweist.

8. Doppelachsaggregat nach einem der vorangegangenen Ansprüche 1 bis 4, dadurch gekennzeichnet, daß für die Lagerung des Tragzapfens (6) im Tragbock (5) als Wälzlager zwei axial beabstandet und spiegelbildlich zueinander angeordnete, den Tragzapfen (6) radial und axial fixierende Kegelrollenlager vorgesehen sind.

9. Doppelachsaggregat nach einem der vorangegangenen Ansprüche 1 bis 4, dadurch gekennzeichnet, daß für die Lagerung des Tragzapfens (6) im Tragbock (5) eine den Tragzapfen (6) radial und axial fixierende Flanschbuchse (42) vorgesehen ist.

## Claims

1. Tandem axle unit of a commercial vehicle, particularly a truck, which Tandem axle unit is connected with the vehicle's two frame longitudinal members (1) via two leaf-spring organs (4) (on each side of the vehicle), which provide both axles with spring suspension and are supported in a basically level position, and via an associated support block (5) for each axle, characterised in that each leaf spring organ (4) is supported on and connected to the top side of an outer free support head (7) of a swivel-mounted support pin (6) in the associated support block (5), the leaf spring organ (4) being in contact with and fastened to the top side of an approximately level support face (9) provided on the support head (7) and located approximately in the plane (11) of the axis of rotation of the support pin (6).

2. Tandem axle unit according to Claim 1, characterised in that the leaf spring organ (4) is supported in a groove (10) which is parallel to the vehicle's longitudinal axis and located on the support head (7) of the support pin (6) and laterally stabilised in the direction of the axis of said support pin (6), the bottom of the groove (10) being the support face (9).

3. Tandem axle unit according to one of the Claims 1 and 2, characterised in that the support pin (6) is a forged part reworked in a chip-removing process.

4. Tandem axle unit according to one of the Claims 1 and 2, characterised in that the support head (7) is formed by a coaxial extension of that part of the support pin (6) which serves as a support in the support block (5) and to which the support face (9) or the groove (10) containing this face (9) are attached by means of a forging and/or a chip-removing process.

5. Tandem axle unit according to one of the foregoing Claims 1 to 4, characterised in that for supporting the support pin (6) in the support block (5) two pivoting bearings (12, 13) or plastic-laminated babitt bearings are provided as sliding bearings, are axially spaced and in a mirror-image arrangement relative to each other and fix the support pin (6) radially and axially.

6. Tandem axle unit according to one of the foregoing Claims 1 to 4, characterised in that for supporting the support pin (6) in the support block (5) two cylindrical roller bearings (23, 24) are provided as rolling bearings, are axially spaced and designed as support bearings and fix the support pin (6) radially and axially.

7. Tandem axle unit according to one of the foregoing Claims 1 to 4, characterised in that for supporting the support pin (6) in the support block (5) two cylindrical roller bearings (23/1, 24/1) are provided as rolling bearings, are axially spaced and designed as movable bearings and fix the support pin (6) radially, a ball bearing (29) being allocated to one cylindrical roller bearing (24/1) as a fixed bearing fixing the support pin (6) axially, the inner ring of said ball bearing (29) not being connected to the support pin (6).

8. Tandem axle unit according to one of the foregoing Claims 1 to 4, characterised in that for supporting the support pin (6) in the support block (5) two tapered rolling bearings are provided as roller bearings, are axially spaced and in a mirror-image arrangement relative to each other and fix the support pin (6) radially and axially.

9. Tandem axle unit according to one of the foregoing Claims 1 to 4, characterised in that a flanged bush (42) fixing the support pin (6) radially and axially is provided for supporting the support pin (6) in the support block (5).

## Revendications

1. Ensemble à double essieu d'un véhicule utilitaire, en particulier d'un camion, qui est relié chaque fois à un des longerons porteurs (1) du châssis du véhicule par un organe à lames de ressort (4) disposé sensiblement selon un plan et supportant élastiquement chacun des deux essieux par l'intermédiaire d'une chaise porteuse associée,
caractérisé en ce que
chaque organe à lames de ressort (4) est fixé en appui sur le dessus d'une tête de réception externe libre (7) d'un tourillon porteur (6) monté tournant dans la chaise porteuse (5) correspondante, cette fixation de l'organe (4) ayant lieu sur une portée d'appui (9) sensiblement plane prévue sur la tête de réception (7), à peu près dans le plan horizontal de rotation (11) du tourillon.

2. Ensemble à double essieu selon la revendication 1,
caractérisé en ce que
l'organe à lames de ressort (4) est logé dans une rainure (10) parallèle à l'axe longitudinal du véhicule, creusée dans la tête de réception (7) du tourillon porteur (6) et dans laquelle l'organe à lames est maintenu latéralement dans la direction axiale de la rainure dont le fond constitue la portée d'appui (9).

3. Ensemble à double essieu selon la revendication 1 ou 2,
caractérisé en ce que
le tourillon porteur (6) est une pièce forgée puis usinée par enlèvement de copeaux.

4. Ensemble à double essieu selon la revendication 1 ou 2,
caractérisé en ce que
la tête de réception (7) est constituée par un prolongement coaxial de la partie du tourillon porteur (6) prévue pour le montage de ce tourillon dans la chaise porteuse (5), prolongement sur lequel est réalisée la portée d'appui (9) ou la rainure (10) contenant cette portée, par forgeage et/ou usinage par enlèvement de copeaux.

5. Ensemble à double essieu selon une des revendications 1 à 4,
caractérisé en ce que
pour monter le tourillon porteur (6) en rotation dans la chaise porteuse (5), il est prévu, en tant que paliers de glissement, deux paliers articulés (12, 13) ou des paliers composites à revêtement plastique axialement espacés et montés symétriquement l'un par rapport à l'autre, qui fixent radialement et axialement le tourillon (6).

6. Ensemble à double essieu selon une des revendications 1 à 4,
caractérisé en ce que
pour monter le tourillon porteur (6) en rotation dans la chaise porteuse (5), il est prévu, en tant que paliers de roulement, deux roulements à rouleaux cylindriques (23, 24) du type palier de soutien et axialement espacés, qui fixent radialement et axialement le tourillon.

7. Ensemble à double essieu selon une des revendications 1 à 4,
caractérisé en ce que
pour monter le tourillon porteur (6) en rotation dans la chaise porteuse (5), il est prévu, en tant que paliers de roulement, deux roulements à rouleaux cylindriques (23/1, 24/1) du type palier libre et axialement espacés, qui fixent radialement le tourillon, et à un roulement à rouleaux cylindrique (24/1) est associé un roulement à billes (29) du type palier de fixation, qui fixe axialement le tourillon (6), la bague intérieure (30) de ce roulement (29) n'ayant aucune liaison avec le tourillon.

8. Ensemble à double essieu selon une des revendications 1 à 4,
caractérisé en ce que
pour monter le tourillon (6) en rotation dans la chaise porteuse (5), il est prévu, en tant que paliers de roulement, deux roulements à billes, axialement espacés et montés symétriquement l'un par rapport à l'autre, qui fixent radialement et axialement le tourillon.

9. Ensemble à double essieu selon une des revendications 1 à 4,
caractérisé en ce que
pour monter le tourillon (6) en rotation dans la chaise porteuse (5), il est prévu une douille à brides (42) fixant axialement et radialement le tourillon (6).
